# FASCICULE DE BREVET EUROPEEN

(11) **EP 1 857 341 B1**
(45) Date de publication et mention de la délivrance du brevet: **13.01.2010**
(21) Numéro de dépôt: 07290639.9
(22) Date de dépôt: 16.05.2007
(51) Int. Cl.: B61D 23/02, B60R 3/02

(54) **Dispositif de marchepied repliable pour véhicule ferroviaire, et véhicule ferroviaire correspondant.**
Hochklappbare Trittbrettvorrichtung für Schienenfahrzeug und entsprechendes Schienenfahrzeug
Folding step device for a railway vehicle, and corresponding railway vehicle.

(30) Priorité: 19.05.2006 FR 0604517
(43) Date de publication de la demande: 21.11.2007
(73) Titulaire: ALSTOM Transport SA, 92300 Levallois-Perret (FR)
(72) Inventeur: Georgel, Philippe, 77590 Vois le Roi (FR); Preiss, Paul, 67110 Reichshoffen (FR); Anthoni, Eric, 67110 Gundershoffen (FR)
(74) Mandataire: Blot, Philippe Robert Emile

(56) Documents cités:
- EP-A1- 0 345 706
- EP-A1- 0 936 120
- WO-A-2005/120920
- CH-A- 421 723
- DE-A1-102004 009 900

## Description

La présente invention concerne un dispositif de marchepied repliable pour véhicule ferroviaire, du type comprenant une marche possédant une surface principale d'appui pour poser le pied, de forme générale sensiblement plane, et des moyens d'articulation de la marche sur un véhicule ferroviaire, autour d'un axe de rotation parallèle à la surface principale d'appui, entre une position abaissée, dans laquelle la marche s'étend de façon à permettre à un usager de prendre appui sur la surface principale d'appui, et une position relevée.

Le document DE-A-10 2004 009 900 décrit un dispositif de marchepied repliable conforme au preambule de la revendication 1.

Les quais de gare se situent à des hauteurs différentes, et notamment à des hauteurs inférieures à celles des planchers des véhicules ferroviaires.

Un dispositif de marchepied du type précité permet, dans la position abaissée de la marche, de disposer d'une marche située à une hauteur intermédiaire entre un quai et un seuil d'une ouverture d'accès du véhicule, pour faciliter l'accès au véhicule.

En position relevée, la marche est rabattue contre le véhicule de façon à ne pas faire saillie hors du gabarit du véhicule lors du déplacement de ce dernier.

Un tel dispositif ne permet pas de faciliter l'accès au véhicule lorsque le quai se situe au dessus d'un certain niveau, car la marche doit dans ce cas rester relevée pour éviter de heurter le quai.

Un but de l'invention est de proposer un dispositif de marchepied permettant de faciliter l'accès à un véhicule ferroviaire pour différentes hauteurs de quai.

A cet effet, l'invention a pour objet un dispositif de marchepied du type précité, **caractérisé en ce que** la marche possède une surface auxiliaire d'appui pour poser le pied, de forme générale plane inclinée par rapport à la surface d'appui principale et parallèle à l'axe de rotation, prévue pour permettre à un usager de prendre appui sur la surface d'appui auxiliaire en position relevée de la marche, et la surface auxiliaire d'appui possède une dimension selon une direction orthogonale à l'axe de rotation supérieure à 50 mm.

Selon d'autres modes de réalisation, le dispositif de marchepied comprend une ou plusieurs des caractéristiques suivantes, prise(s) isolément ou selon toutes les combinaisons techniquement possibles :
- le rapport de la dimension de la surface d'appui auxiliaire selon une direction orthogonale à l'axe de rotation, à la distance entre la surface d'appui auxiliaire et l'axe de rotation est compris entre 1/4 et 2/3 ;
- la surface d'appui auxiliaire est formée par le chant du nez de la marche ; et
- la dimension de la surface d'appui auxiliaire selon la direction orthogonale à l'axe de rotation est inférieure à 150 mm.

L'invention concerne également un véhicule ferroviaire comprenant une ouverture d'accès à l'intérieur du véhicule ferroviaire, l'ouverture d'accès possédant un seuil, **caractérisé en ce qu**'il comprend un dispositif de marchepied repliable, dont la marche est articulée sur le véhicule autour de l'axe de rotation entre une position abaissée, dans laquelle la marche s'étend vers l'extérieur du véhicule de façon à permettre à un usager de prendre appui sur la surface d'appui principale située à un niveau inférieur à celui du seuil pour monter dans le véhicule ou en descendre par l'ouverture d'accès, et une position relevée, dans laquelle la marche est repliée contre le véhicule de sorte que la surface d'appui auxiliaire prolonge le seuil vers l'extérieur du véhicule.

Selon d'autres modes de réalisation, le véhicule comprend une ou plusieurs des caractéristiques suivantes, prise(s) isolément ou selon toutes les combinaisons techniquement possibles :
- en position relevée de la marche, la surface d'appui auxiliaire est écartée du seuil ;
- la marche est déplaçable dans une position de repos, dans laquelle la surface d'appui auxiliaire est escamotée au moins en partie sous le seuil ;
- la hauteur du seuil par rapport au sommet des rails d'une voie ferrée sur laquelle repose le véhicule est comprise entre 900 mm et 1000 mm ; et
- la hauteur de l'axe de rotation par rapport au sommet des rails d'une voie ferrée sur laquelle repose le véhicule est comprise entre 700 mm et 900 mm.

L'invention et ses avantages seront mieux compris à la lecture de la description qui va suivre, donnée uniquement à titre d'exemple, et faite en se référant aux dessins annexés, sur lesquels :
- les Figures 1 et 2 sont des vues schématiques en perspective d'une marche d'un dispositif de marchepied conforme à l'invention;
- les Figures 3 à 6 sont des vues schématiques de côté du dispositif de marchepied des Figures 1 et 2 monté sur un véhicule ferroviaire, illustré dans différentes configurations; et
- la Figure 7 est une vue schématique analogue à celle de la Figure 3, illustrant un dispositif de marchepied selon une variante de l'invention.

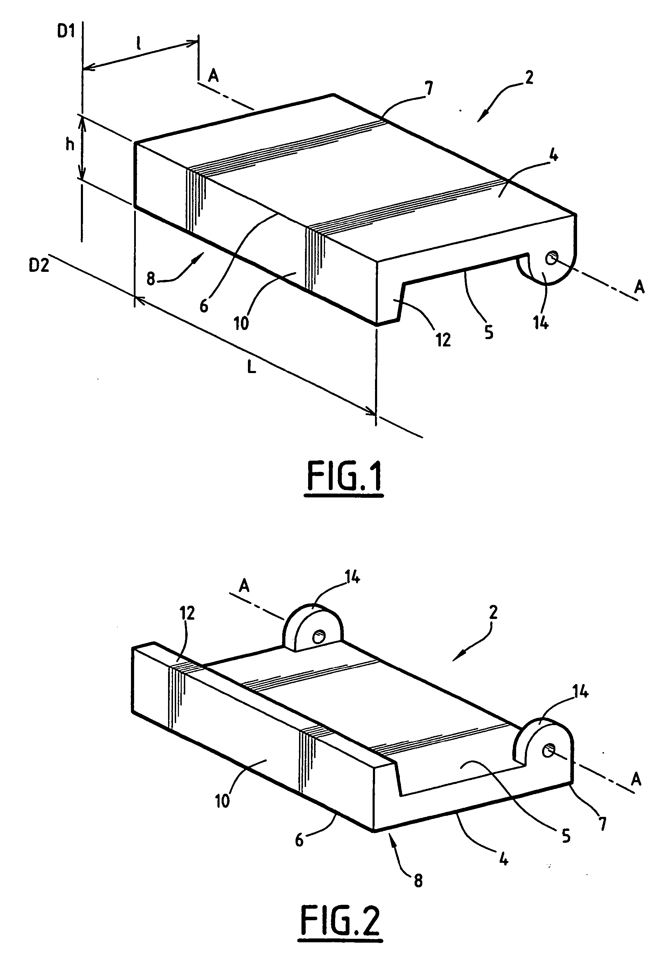

La marche 2 représentée sur les Figures 1 et 2 est de forme générale parallélépipédique, et comprend une surface supérieure 4, et une surface inférieure 5.

La surface 4 est de forme générale sensiblement plane et rectangulaire, et s'étend entre un bord avant 6 et un bord arrière 7 parallèles et opposés. La surface 4 forme une surface principale d'appui pour poser le pied.

L'extrémité avant 8 de la marche 2 constitue le nez de celle-ci. L'extrémité 8 comprend un rebord 12 en saillie sur la surface 5, et possède un chant 10 formant une surface auxiliaire d'appui pour poser le pied.

Le chant 10 est de forme générale sensiblement plane et rectangulaire, et est sensiblement perpendiculaire à la surface 4. Le chant 10 s'étend depuis le bord 6 jusqu'à l'extrémité libre du rebord 12.

La marche 2 comprend deux éléments 14 en saillie sur la surface 5, formant palier de rotation de la marche 2 autour d'un axe A adjacent au bord 7 et parallèle à celui-ci. Les éléments 14 sont espacés suivant l'axe A, et munis d'orifices formant palier coaxiaux d'axe l'axe A. L'axe A est parallèle à la surface 4 et au chant 10.

Le chant 10 possède, selon une direction D1 (Figure 1) orthogonale à l'axe A, une dimension h supérieure à 50 mm, et dont le rapport R à la distance l entre le chant 10 et l'axe A est compris entre 1/4 et 2/3.

Le chant 10 pourrait présenter une dimension h variable suivant une direction D2 perpendiculaire à la direction D1. De préférence, le chant 10 présente la dimension h requise dans une zone possédant une largeur L, suivant la direction D2, d'au moins 50 mm.

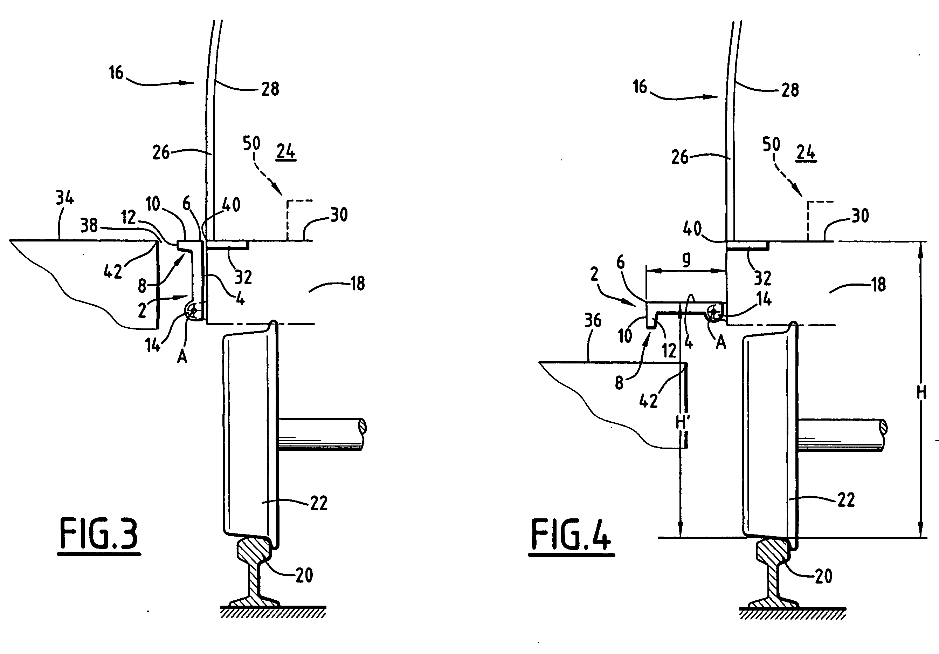

Telle que représentée sur les figures 3 et 4, une voiture de voyageurs 16, d'une rame ferroviaire de transport de voyageurs, comprend de manière connue un châssis 18 en appui sur des rails 20 d'une voie ferrée, un seul rail étant représenté, par l'intermédiaire de roues 22 d'un bogie, et un compartiment voyageurs 24 auquel les voyageurs peuvent accéder depuis l'extérieur par une ouverture 26 ménagée dans une face latérale 28 de la voiture 16.

Le compartiment voyageurs 24 comprend un plancher 30 terminé au droit de l'ouverture 26 par un seuil 32.

La voiture 16 est susceptible d'être arrêtée devant un quai 34 sensiblement à la même hauteur que le seuil 32 (Figure 3), ou devant un quai 36 à une hauteur inférieure à celle du seuil 32 (Figure 4).

Dans le cas d'un quai 34, un interstice ou lacune 38 est présente entre le bord extérieur 40 du seuil 32 et le bord 42 du quai 34.

La marche 2 est articulée sur le châssis 18, autour de son axe A disposé parallèle au bord 40, entre une position relevée (Figure 3), dans laquelle la marche 2 s'étend sensiblement verticalement vers le haut à partir des éléments 14, et une position abaissée (Figure 4), dans laquelle la marche 2 s'étend sensiblement horizontalement vers l'extérieur de la voiture 16. La marche 2 est déplacée de façon connue en soi par un actionneur entre ses différentes positions.

En position abaissée (Figure 4), la surface 4 est sensiblement horizontale et dirigée vers le haut, et se situe à un niveau intermédiaire entre le niveau du quai 36 et celui du seuil 32. Les passagers peuvent prendre appui à l'aide de leurs pieds sur la surface 4 pour monter plus facilement dans la voiture 16 ou pour en descendre.

En position relevée (Figure 3), le chant 10 se situe entre les bords 40 et 42, et prolonge le seuil 32 vers l'extérieur de la voiture 16. Le chant 10 réduit la lacune 38 de sorte qu'il forme une surface d'appui intermédiaire pour les passagers entre le quai 34 et le seuil 32.

La dimension h suffisamment importante permet d'obtenir une surface suffisante pour constituer une surface intermédiaire d'appui stable pour le pied entre le quai 34 et le seuil 32, et comblant efficacement la lacune 38.

Le rapport R compris entre 1/4 et 2/3 permet d'obtenir une marche 2 à la fois compacte, capable de combler efficacement la lacune 38 dans le cas d'un quai 34 haut, et de former une marche avec un giron g défini comme la distance en plan entre le bord 6 et le bord 40, suffisant pour être ergonomique, lorsque la marche est en position abaissée (Figure 4).

Pour des raisons d'ergonomie, de préférence, la dimension h est comprise entre 50 mm et 150 mm, et de préférence, la dimension l est comprise entre 150 mm et 300 mm. Le rebord 12 permet d'augmenter la dimension h sans augmenter l'épaisseur de la marche 2 dans son ensemble. Le giron g est avantageusement compris entre 150 mm et 300 mm.

L'axe A est avantageusement décalé latéralement vers l'extérieur de la voiture 16 par rapport au bord 40, d'une distance d comprise entre 50 mm et 100 mm, de façon à permettre l'obtention d'un giron g suffisant.

De préférence, la hauteur H entre le sommet des rails 20 et le seuil 32 est comprise entre 900 mm et 1000 mm, et de préférence, la hauteur H' entre le sommet des rails 20 et l'axe A est comprise entre 700 mm et 900 mm.

Ceci permet d'obtenir une marche 2 en position abaissée à une hauteur intermédiaire entre les quais hauts situés généralement à une hauteur comprise entre 700 mm et 900 mm par rapport au sommet des rails, et des quais bas situés généralement à une hauteur comprise entre 500 mm et 600 mm par rapport au sommet des rails.

Tel qu'illustré sur la Figure 3, le chant 10 de la marche 2 en position relevée est sensiblement jointif avec le seuil 32.

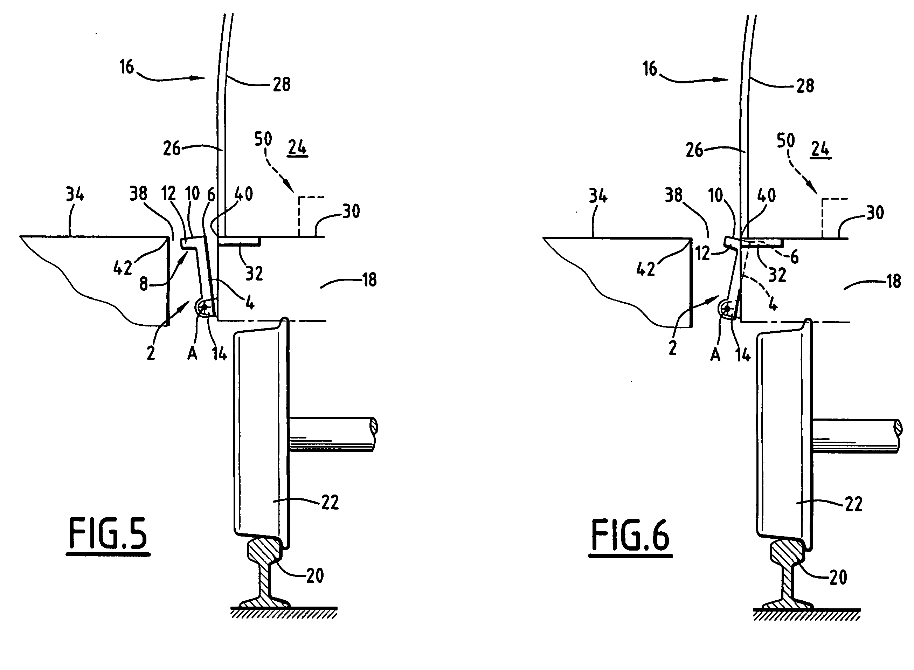

De façon alternative, tel qu'illustré sur la Figure 5, il est possible de prévoir que, en position relevée de la marche 2, le chant 10 est écarté du seuil 32.

Ainsi, dans le cas d'un quai 34, la lacune 38 est mieux comblée, car il subsiste seulement deux petits interstices de part et d'autre du chant 10, respectivement avec le bord 40 et le bord 42.

Dans ce cas, il est possible de prévoir que la marche 2 soit déplaçable dans une position de repos correspondant à la position de la Figure 3 pour éviter que le rebord 12 ne fasse saillie en dehors du gabarit de la voiture 16.

La marche 2 est alors déplacée de la position de repos (Figure 3) à la position relevée (Figure 5) en la pivotant de quelques degrés vers la position abaissée (Figure 4).

Tel que représenté sur la Figure 6, dans tous les cas, il est possible de prévoir une position de repos de la marche 2, dans laquelle le chant 10 est au moins en partie escamoté sous le seuil 32, pour éviter que le rebord 12 ne fasse saillie en dehors du gabarit de la voiture 16.

La prévision d'une position de repos permet de prévoir un chant 10 de dimension h augmentée, de façon à mieux combler la lacune 38. Un angle de déplacement entre la position de repos et la position relevée est de l'ordre d'un quelques degrés à une dizaine de degrés.

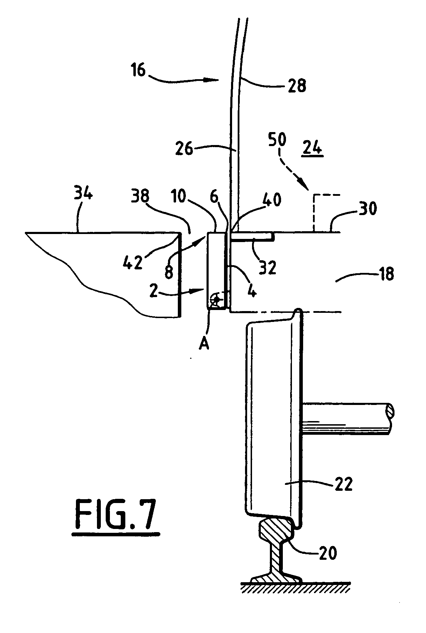

Dans la variante illustrée sur la Figure 7, la marche 2 n'est pas munie de rebord, mais est épaisse, de façon que le chant 10 présente une dimension h suffisante.

Tel qu'illustré sur les figures 3 à 6, le seuil 32 est coplanaire avec le plancher 30, ou, de façon alternative, constitue une marche d'un escalier 50 (représenté en pointillés) montant ou descendant vers le plancher 30 du compartiment 24.

Le tableau suivant illustre, pour les différentes variantes, les positions possibles de la marche 2 pour différentes hauteurs de quai et différentes hauteurs de seuil 32.

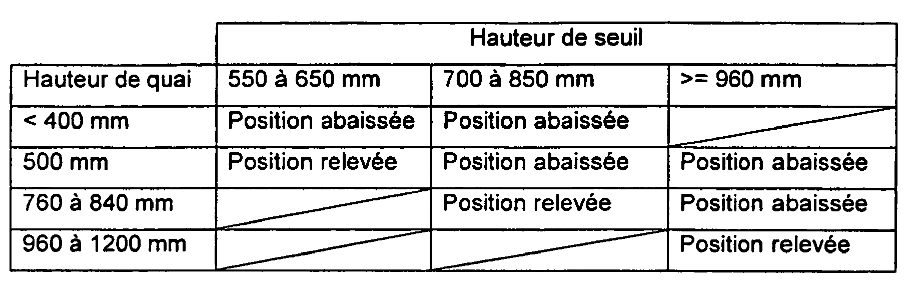

L'invention propose également un dispositif de marchepied repliable, dans lequel, indépendamment de la valeur minimale de la dimension h, le rapport R est compris entre 1/4 et 2/3.

L'invention s'applique aux marchepieds pour accéder aux voitures de voyageurs, aux locomotives, ou aux voitures de marchandise, et de façon générale aux véhicules ferroviaires.

## Revendications

1. Dispositif de marchepied repliable pour véhicule ferroviaire, du type comprenant une marche (2) possédant une surface principale d'appui (4) pour poser le pied, de forme générale plane, et des moyens d'articulation (14) de la marche (2) sur un véhicule ferroviaire, autour d'un axe de rotation (A) parallèle à la surface d'appui principale (4), entre une position abaissée, dans laquelle la marche (2) s'étend de façon à permettre à un usager de prendre appui sur la surface d'appui principale (4), et une position relevée,
**caractérisé en ce que** la marche (2) possède une surface auxiliaire d'appui (10) pour poser le pied, formée par le chant d'une extrémité avant (8) de la marche (2), de forme générale plane inclinée par rapport à la surface d'appui principale (4) et parallèle à l'axe de rotation (A), et prévue pour permettre à un usager de prendre appui sur la surface d'appui auxiliaire (10) en position relevée de la marche (2), et **en ce que** la surface auxiliaire d'appui possède une dimension (h) selon une direction orthogonale à l'axe de rotation (A) supérieure à 50 mm.

2. Dispositif selon la revendication 1, **caractérisé en ce que** le rapport (R) de la dimension (h) de la surface d'appui auxiliaire (10) selon une direction orthogonale à l'axe de rotation (A), à la distance (l) entre la surface d'appui auxiliaire (10) et l'axe de rotation (A) est compris entre 1/4 et 2/3.

3. Dispositif selon la revendication 1 ou 2, **caractérisé en ce que** l'extrémité avant (8) de la marche (2) possède un rebord (12) en saillie sur une surface inférieure (5) de la marche (2).

4. Dispositif de marchepied selon l'une quelconque des revendications précédentes, **caractérisé en ce que** la dimension (h) de la surface d'appui auxiliaire (10) selon la direction orthogonale à l'axe de rotation (A) est inférieure à 150 mm.

5. Véhicule ferroviaire (16) comprenant une ouverture (26) d'accès à l'intérieur du véhicule ferroviaire (16), l'ouverture d'accès (26) possédant un seuil (32), **caractérisé en ce qu'**il comprend un dispositif de marchepied repliable selon l'une quelconque des revendications 1 à 4, dont la marche (2) est articulée sur le véhicule (16) autour de l'axe de rotation (A) entre une position abaissée, dans laquelle la marche (2) s'étend vers l'extérieur du véhicule (16) de façon à permettre à un usager de prendre appui sur la surface d'appui principale (4) située à un niveau inférieur à celui du seuil (32) pour monter dans le véhicule ou en descendre par l'ouverture d'accès (26), et une position relevée, dans laquelle la marche (2) est repliée contre le véhicule (16) de sorte que la surface d'appui auxiliaire (10) prolonge le seuil (32) vers l'extérieur du véhicule (16).

6. Véhicule ferroviaire (16) selon la revendication 5, **caractérisé en ce que**, en position relevée de la marche (2), la surface d'appui auxiliaire (10) est écartée du seuil (32).

7. Véhicule ferroviaire (16) selon la revendication 5 ou 6, **caractérisé en ce que** la marche (2) est déplaçable dans une position de repos, dans laquelle la surface d'appui auxiliaire (10) est escamotée au moins en partie sous le seuil (32).

8. Véhicule ferroviaire (16) selon l'une quelconque des revendications 5 à 7, **caractérisé en ce que** la hauteur (H) du seuil (32) par rapport au sommet des rails (20) d'une voie ferrée sur laquelle repose le véhicule (16) est comprise entre 900 mm et 1000 mm.

9. Véhicule ferroviaire (16) selon l'une quelconque des revendications 5 à 8, **caractérisé en ce que** la hauteur (H') de l'axe de rotation (A) par rapport au sommet des rails (20) d'une voie ferrée sur laquelle repose le véhicule (16) est comprise entre 700 mm et 900 mm.

## Claims

1. A folding step device for a railway vehicle of the type comprising a step (2) having a main support surface (4), generally level in form, where the foot is placed, and means for articulating (14) the step (2) on a railway vehicle about an axis of rotation (A) parallel to the main support surface (4) between a lowered position, wherein the step (2) extends such as to enable a user to be supported on the main support surface (4), and a raised position,
**characterised in that** the step (2) has an auxiliary support surface (10) where the foot is placed, formed by the edge of a front end (8) of the step (2), in a generally level form inclined in relation to the main support surface (4) and parallel to the axis of rotation (A), and provided in order to enable a user to be supported by the auxiliary support surface (10) in the raised position of the step (2), and **in that** the auxiliary support surface has a dimension (h) in a direction orthogonal to the axis of rotation (A) greater than 50 mm.

2. The device according to Claim 1, **characterised in that** the ratio (R) of the dimension (h) of the auxiliary support surface (10) in a direction orthogonal to the axis of rotation (A) to the distance (l) between the auxiliary support surface (10) and the axis of rotation (A) is between 1/4 and 2/3.

3. The device according to Claim 1 or 2, **characterised in that** the front end (8) of the step (2) has a an edge (12) protruding over a lower surface (5) of the step (2).

4. The step device according to any of the preceding claims, **characterised in that** the dimension (h) of the auxiliary support surface (10) in the direction orthogonal to the axis of rotation (A) is less than 150 mm.

5. A railway vehicle (16) comprising an opening (26) giving access to the inside of the railway vehicle (16), the access opening (26) having a threshold (32), **characterised in that** it comprises a folding step device according to any of Claims 1 to 4, the step (2) of which is articulated on the vehicle (16) about the axis of rotation (A) between a lowered position, wherein the step (2) extends towards the outside of the vehicle (16) such as to enable a user to be supported on the main support surface (4) located at a level lower than that of the threshold (32) in order to get into the vehicle or to get out of it via the access opening (26), and a raised position wherein the step (2) is folded against the vehicle (16) such that the auxiliary support surface (10) extends the threshold (32) towards the outside of the vehicle (16).

6. The railway vehicle (16) according to Claim 5, **characterised in that** in the raised position of the step (2) the auxiliary support surface (10) is moved away from the threshold (32).

7. The railway vehicle (16) according to Claim 5 or 6, **characterised in that** the step (2) can be moved into a rest position wherein the auxiliary support surface (10) is stowed at least partially beneath the threshold (32).

8. The railway vehicle (16) according to any of Claims 5 to 7, **characterised in that** the height (H) of the threshold (32) in relation to the top of the rails (20) of a rail track on which the vehicle (16) is resting is between 900 mm and 1000 mm.

9. The railway vehicle (16) according to any of Claims 5 to 8, **characterised in that** the height (H') of the axis of rotation (A) in relation to the top of the rails (20) of a rail track on which the vehicle (16) is resting is between 700 mm and 900 mm.

## Patentansprüche

1. Klappbare Trittbrett-Vorrichtung für schienengeführte Fahrzeuge der Art, die eine Stufe (2) umfasst, die eine Hauptabstützfläche (4) zum Aufsetzen des Fußes von allgemeiner ebener Form und Mittel (14) zur gelenkigen Verbindung der Stufe (2) mit einem schienengeführten Fahrzeug um eine Drehachse (A) parallel zur Hauptabstützfläche (4) zwischen einer abgesenkten Stellung, in der die Stufe (2) sich derart erstreckt, dass es einem Benutzer möglich ist, sich auf der Hauptabstützfläche (4) abzustützen, und einer angehobenen Stellung besitzt,
**dadurch gekennzeichnet, dass** die Stufe (2) eine Hilfsabstützfläche (10) zum Aufsetzen des Fußes besitzt, die von der Kante eines vorderen Endes (8) der Stufe (2) gebildet wird und die eine ebene, in Bezug auf die Hauptabstützfläche (4) geneigte allgemeine Form aufweist und parallel zur Drehachse (A) angeordnet ist und vorgesehen ist, um es einem Benutzer zu ermöglichen, sich auf der Hilfsabstützfläche (10) in angehobener Stellung der Stufe (2) abzustützen, und dass die Hilfsabstützfläche eine Abmessung (h) gemäß einer orthogonalen Richtung der Drehachse (A) besitzt, die größer als 50 mm ist.

2. Vorrichtung nach Anspruch 1, **dadurch gekennzeichnet, dass** das Verhältnis (R) der Abmessung (h) der Hilfsabstützfläche (10) gemäß einer orthogonalen Richtung zur Drehachse (A) zum Abstand (l) zwischen der Hilfsabstützfläche (10) und der Drehachse (A) zwischen und einschließlich 1/4 und 2/3 liegt.

3. Vorrichtung nach Anspruch 1 oder 2, **dadurch gekennzeichnet, dass** das vordere Ende (8) der Stufe (2) einen Rand (12) besitzt, der von einer unteren Fläche (5) der Stufe (2) hervorspringt.

4. Trittbrett-Vorrichtung nach einem beliebigen der vorhergehenden Ansprüche, **dadurch gekennzeichnet, dass** die Abmessung (h) der Hilfsabstützfläche (10) gemäß einer Richtung orthogonal zur Drehachse (A) kleiner als 150 mm ist.

5. Schienengeführtes Fahrzeug (16) mit einer Öffnung (26) für den Zugang in das Innere des schienengeführten Fahrzeugs (16), wobei die Zugangsöffnung (26) eine Schwelle (32) besitzt, **dadurch gekennzeichnet, dass** es eine klappbare Trittbrett-Vorrichtung nach einem beliebigen der Ansprüche 1 bis 4 umfasst, deren Stufe (2) an dem Fahrzeug (16) um die Drehachse (A) gelenkig angeordnet ist zwischen einer abgesenkten Stellung, in der die Stufe (2) sich nach außen in Bezug auf das Fahrzeug (16) erstreckt, derart, dass es einem Benutzer ermöglicht, sich auf der Hauptabstützfläche (4) abzustützen, die zu dem Niveau der Schwelle (32) an einem darunter liegenden Niveau angeordnet ist, um durch die Zugangsöffnung (26) in das Fahrzeug einzusteigen oder daraus auszusteigen, und einer angehobenen Stellung, in der die Stufe (2) gegen das Fahrzeug (16) geklappt ist, derart, dass die Hilfsabstützfläche (10) die Schwelle (32) nach außen in Bezug auf das Fahrzeug (16) verlängert.

6. Schienengeführtes Fahrzeug (16) nach Anspruch 5, **dadurch gekennzeichnet, dass** in der hochgeklappten Stellung der Stufe (2) die Hilfsabstützfläche (10) zu der Schwelle (32) beabstandet ist.

7. Schienengeführtes Fahrzeug (16) nach Anspruch 5 oder 6, **dadurch gekennzeichnet, dass** die Stufe (2) in eine Ruhestellung verstellbar ist, in der die Hilfsabstützfläche (10) zumindest teilweise unter der Schwelle (32) versteckt ist.

8. Schienengeführtes Fahrzeug (16) nach einem beliebigen der Ansprüche 5 bis 7, **dadurch gekennzeichnet, dass** die Höhe (H) der Schwelle (32) in Bezug auf den Scheitelpunkt der Schienen (20) eines Schienenweges, auf dem das Fahrzeug (16) ruht, zwischen und einschließlich 900 mm und 1000 mm liegt.

9. Schienengeführtes Fahrzeug (16) nach einem beliebigen der Ansprüche 5 bis 8, **dadurch gekennzeichnet, dass** die Höhe (H') der Drehachse (A) in Bezug auf den Scheitelpunkt der Schienen (20) eines Schienenweges, auf dem das Fahrzeug (16) ruht, zwischen und einschließlich 700 mm und 900 mm liegt.
